# EUROPEAN PATENT APPLICATION

(11) **EP 3 932 190 A1**
(43) Date of publication of application: **05.01.2022**
(21) Application number: 21158822.3
(22) Date of filing: 23.02.2021
(51) Int. Cl.: A01K 1/01

(54) **HYGIENE DEVICE FOR ANIMALS**

(30) Priority: 02.07.2020 IT 202000003850 U
(71) Applicant: Ronda, Marco, 16166 Genova (IT)
(72) Inventor: Ronda, Marco, 16166 Genova (IT)
(74) Representative: Bottino, Giovanni

(57) **Abstract**

The invention concerns a hygiene device for animals (10) which comprises an element (11) for collecting the animal's body fluids and an attractant element (12), disposed inside said collection element (11), configured to be instinctively chosen by the animal as a designated zone on which to urinate.

## Description

### FIELD OF THE INVENTION

Embodiments described here concern a hygiene device for animals, in particular for male dogs.

The hygiene device for dogs is used to train and/or accustom the dog to urinate in correspondence with a determinate environmental location, preferably, but non-restrictively, inside an enclosure, in a public or private environment, in the open or indoors, where the dog usually lives.

### BACKGROUND OF THE INVENTION

Hygiene devices for dogs are known, configured so that a dog can urinate therein, which comprise an element for collecting body fluids (for example, urine), above which a grid is located.

The grid is configured to drain the dog's body fluids by gravity inside the collection element.

Preferably, above the grid there is a column designed as the location in which the dog should urinate.

The column rests directly on the grid and is configured to project upward, starting from the grid itself. In particular, the column can have a symmetry of revolution about an axis of longitudinal development, assuming a shape similar to a cylinder or a truncated cone, or it can have a shape similar to a truncated pyramid or, more generally, a polyhedron. In reality, the column is not very functional, because the dog is not instinctively attracted to it.

A first disadvantage of these known hygiene devices for dogs is that the dog, positioning itself on the grid to urinate, treads on the upper surface of the grid, dirtying the plantar pads of its paws with the residues of body liquid left on the meshes of the grid itself. The pads of the dog's paws are very delicate and important for its health, since they perform the functions of balance, eliminating sweat and cushioning the impact of weight on the dog's paws.

Furthermore, once the dog has urinated and has come down from the grid, it can also unknowingly dirty the surfaces of the home environment or the enclosure in which it is housed, or the adjacent areas of a public environment in which the known hygiene device is located.

All the more reason these disadvantages are valid even if the dog expels the feces, which, at least partly, remain on the grid, in an unhygienic manner, which must be washed and cleaned as soon as possible, in order to prevent spreading unpleasant odors and the proliferation of bacteria.

Another disadvantage of known hygiene devices for dogs is that the column is small, so that it becomes inconvenient to use for dogs of all sizes and, in any case, not very suitable for large and/or elderly and/or sick dogs.

Furthermore, another disadvantage is that the column is identified by the dog as a toy, and since it is removable, it can be gripped by the dog with its mouth and moved at will. Moreover, in this case, residues of body fluid that can be ingested by the dog through its tongue can remain on the external surface of the column, so that the column becomes anti-hygienic and harmful to the dog's health.

Another disadvantage of known hygiene devices for dogs as above lies in the fact that, usually, any shaped element in the form of a grid is avoided by dogs, so that it can be difficult to train and/or accustom the dog to urinate over it.

Another disadvantage of known hygiene devices for dogs is that the grid and the column require continuous cleaning, to prevent the growth of bacteria and to maintain domestic and/or public hygiene. Furthermore, due to its conformation, the grid is difficult to clean, in particular to remove the residues of solid exereta.

An additional disadvantage of known hygiene devices for dogs is that the presence of the column makes it difficult to transport the devices.

As well as such hygiene devices for dogs equipped with grids, disposable absorbent mats for dog urine are also known, which can only be used in the home environment for female dogs, and are unsuitable and non-functional for the instinctive behavior of male dogs.

One disadvantage of these absorbent mats is that they must be replaced very frequently, in order to maintain the hygiene and healthiness of the assigned place where the dog has to urinate, and of the surrounding surfaces.

Consequently, the costs to be borne by the dog owner become high.

Another disadvantage is that these absorbent mats are mainly suitable for puppies or small dogs, and exclusively female dogs, while they are not suitable for use in the case of larger and/or elderly and/or sick dogs, and in general for all male dogs.

Finally, another disadvantage of absorbent mats is that they are polluting, as they cannot be disposed of in a differentiated manner.

There is therefore a need to perfect a hygiene device for dogs which can overcome at least one of the disadvantages of the state of the art.

In particular, one purpose of the present invention is to provide a hygiene device for dogs suitable to be used for puppies, small and/or medium-sized dogs (for example, but not restrictively, up to about 20 kg in weight) and for elderly and/or sick dogs, in domestic environments, but not exclusively.

An additional purpose of the present invention is to provide a hygiene device for dogs which prevents the dog from dirtying the plantar pads of its paws and, therefore, from dirtying the areas adjacent to the device.

Another purpose of the present invention is to provide a hygiene device for dogs which is attractive and which, therefore, allows the dog to be quickly trained and accustomed to choosing it as an exclusive location in which to urinate.

It is also a purpose of the present invention to provide a hygiene device for dogs which is light, portable and easily transportable.

Another purpose of the present invention is to provide a hygiene device for dogs which is easy to clean and with intervals of time between one cleaning and the next which are as infrequent as possible.

Another purpose is that the production cost of the hygiene device for dogs according to the present invention is not higher than, or is possibly lower than, that of devices belonging to the state of the art.

It is also a purpose of the present invention to provide a hygiene device for dogs which is ecological, that is, once its life cycle has ended, it can be easily disposed of as waste and recycled.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a hygiene device for animals comprises a collection element which includes inside it a zone for the collection of body fluids expelled by an animal, in particular by a dog (for example, urine).

Furthermore, this device comprises an attractant/recall element - hereafter also only attractant element - which develops in a vertical direction and is disposed above the bottom of the collection element, projecting upward starting from the collection zone.

This attractant element has a shape such that it is instinctively chosen by the dog as the designated zone on which to urinate.

The attractant element comprises a target surface configured to facilitate the flow and deposit by gravity, toward the collection element, of the dog's body fluids, which are expelled against such target surface.

According to some embodiments, the attractant element is made of deformable material and comprises, without a break in continuity, a plurality of bands, coaxial to the longitudinal axis and to each other, having a progressively increasing area starting from the top and down to the lower base of such attractant element. These bands are joined together by means of bending lines which keep the target surface smooth and which are configured so that each one is placed on the one immediately adjacent to it, when they are subjected to a compression force exerted along the direction of the longitudinal axis, completely re-entering inside the collection zone.

In the latter case, the device as above also comprises a lid configured to close the collection element at the upper part, keeping the attractant element made of deformable material in a compressed position, and making this device compact and, therefore, easy to transport.

According to a preferential embodiment, the device comprises a handle made in a single body with, or fixed to the attractant element or to the lid, or a slot made on the target surface of the attractant element, which are all configured so that the device can easily be gripped and transported.

According to further embodiments, the hygiene device for dogs comprises an absorbent element configured to be inserted in correspondence with the collection zone, above the bottom of the collection element, and to attract and incorporate the body fluids expelled by the dog.

All the elements that constitute the hygiene device for dogs, according to the present invention, are preferably made of ecological, non-toxic, odorless and wear-resistant plastic material. In this way, if the dog were to ingest any parts of the device, these are not dangerous for the animal because they do not break down into small fractions which, in any case, are not sharp, and are also not harmful to its health.

According to a preferential embodiment, the possible displacement and/or overturning of the hygiene device for dogs can be prevented either by means of at least one anti-slip element, attached in correspondence with the lower surface of the bottom, or by placing the bottom directly on an absorbent mat, which rests on the ground. In this way, a hygiene device for dogs is obtained which overcomes the limitations of the state of the art and eliminates the defects present therein.

According to one possible embodiment, the hygiene device for dogs comprises a tank configured to contain a washing liquid, in particular water, for washing the target surface. The tank is preferably defined by an internal cavity of the attractant element. In this embodiment, the device comprises a pumping member located on the bottom of the tank and configured to withdraw the washing liquid from the tank in order to convey it into a small tube toward the top of the attractant element, in order to then spray the target surface. By way of a non-limiting example, the small tube can be shaped so as to directly reach the target surface, or one or more slits can be provided, made through on the attractant element. Preferably, these slits are distributed circularly in correspondence with the upper part of the hygiene device so that they can effectively spray the target surface even when the hygiene device is not positioned on a totally level surface.

Manual or automatic means for actuating the pumping member, and means for the electric power supply of the latter are provided.

In accordance with one possible embodiment, the hygiene device according to the present invention can be connected directly to the public water network and/or to the sewage network in order to respectively allow running water to reach the device and facilitate the discharge of the excreta.

In particular, a hygiene device is obtained which is naturally chosen by dogs for urinating, which is portable, easy to clean and eco-friendly, with low production costs, and which respects the health of the dog and the hygiene of the environments in which such device is positioned.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- figs. 1a, 2a and 3a are three perspective views which represent three variants of a hygiene device for dogs, according to embodiments described here;
- figs. 1b, 2b and 3b are three schematic cross-section views respectively along planes I-I of fig. 1a, II-II of fig. 2a and III-III of fig. 3a;
- fig. 3c is a perspective view which only represents the collection element of the third variant of fig. 3a;
- fig. 4a is a perspective view that represents another variant of a hygiene device for dogs, according to embodiments described here, in the condition of use;
- fig. 4b is a schematic cross-section view along plane IV-IV of fig. 4a;
- fig. 5 is a perspective view of the variant of fig. 4a, in the transport condition;
- fig. 5a is a perspective view which only represents the lid relating to the variant of fig. 4a;
- fig. 6 is a cross-section view along plane VI-VI of fig. 5 of the variant of fig. 4a, in the transport condition;
- fig. 7 is a cross-section view of other embodiments of the hygiene device for dogs according to the present invention.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

We will now refer in detail to the possible embodiments of the invention, of which one or more non-limiting examples are shown in the attached drawings. The phraseology and terminology used here is also for the purposes of providing non-limiting examples.

The attached drawings are used to describe some embodiments of a hygiene device for animals, used, in particular, for male dogs and indicated, hereafter, with reference number 10.

The hygiene device for dogs 10 comprises an element 11 for collecting the body fluids of a dog (for example, urine) and an attractant element 12, disposed inside the collection element 11.

The collection element 11 comprises a bottom 11a which rests on the ground.

By attractant element 12, here and hereafter in the description we mean a part of the hygiene device 10 configured so that the dog instinctively chooses it as the designated zone on which to urinate. In other words, the attractant element 12 constitutes a visual reference for the dog, which is naturally led to raise its leg to urinate against it.

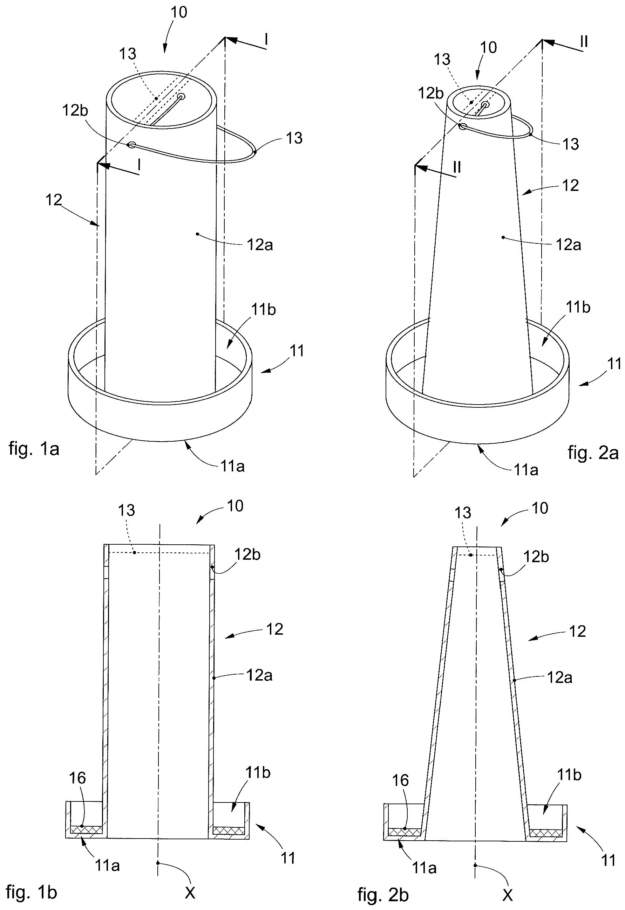

According to one possible embodiment, with reference to figs. 1a, 1b, 2a, 2b, 4a, 4b, 5, and 6, the urine collection element 11 can have a solid of revolution symmetry around a longitudinal axis X, disposed vertically, comparable, for example, to a cylinder or a truncated cone with the base with the smaller diameter facing toward the bottom 11a.

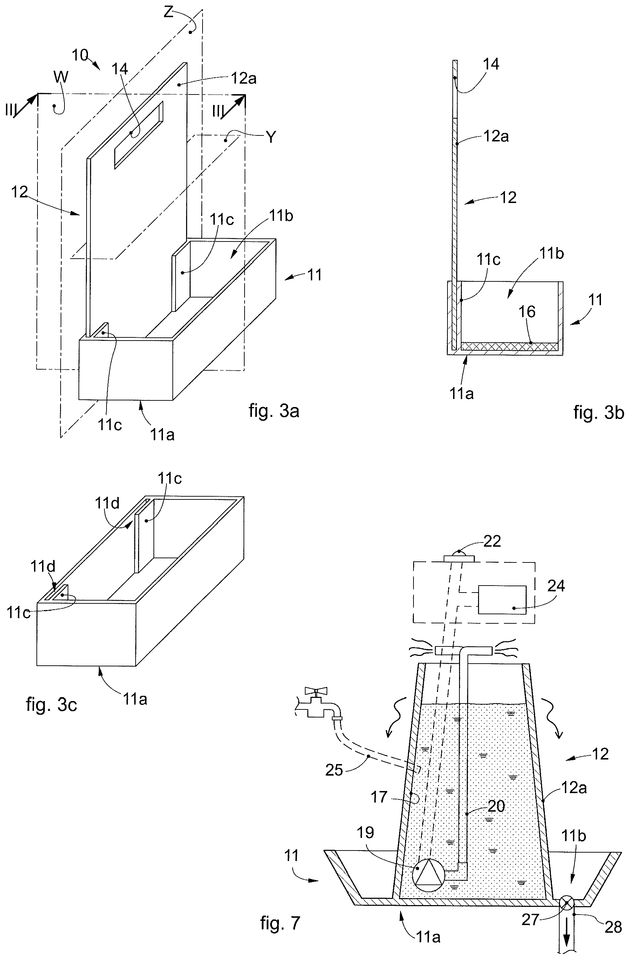

According to another variant, with reference to figs. 3a, 3b and 3c, the collection element 11 has a shape similar to a polyhedron, having a polygonal base that rests on the ground. More preferentially, this collection element is similar to a rectangular parallelepiped, having the base with the longer side resting on the ground.

The collection element 11 is, moreover, hollow inside and without the upper base, opposite the bottom 11 a.

In general, this collection element 11 can be assimilated to a tray and comprises inside it a collection zone 11b, delimited at the lower part by the bottom 11a, configured to collect the body fluids expelled by the dog.

Instead, the attractant element 12 develops in a vertical direction and is disposed above the bottom 11a of the collection element 11, projecting upward starting from the collection zone 11b.

According to possible embodiments, with reference to figs. 1a and 1b, the attractant element 12 can have a solid of revolution symmetry around the longitudinal axis X, similar to a cylinder.

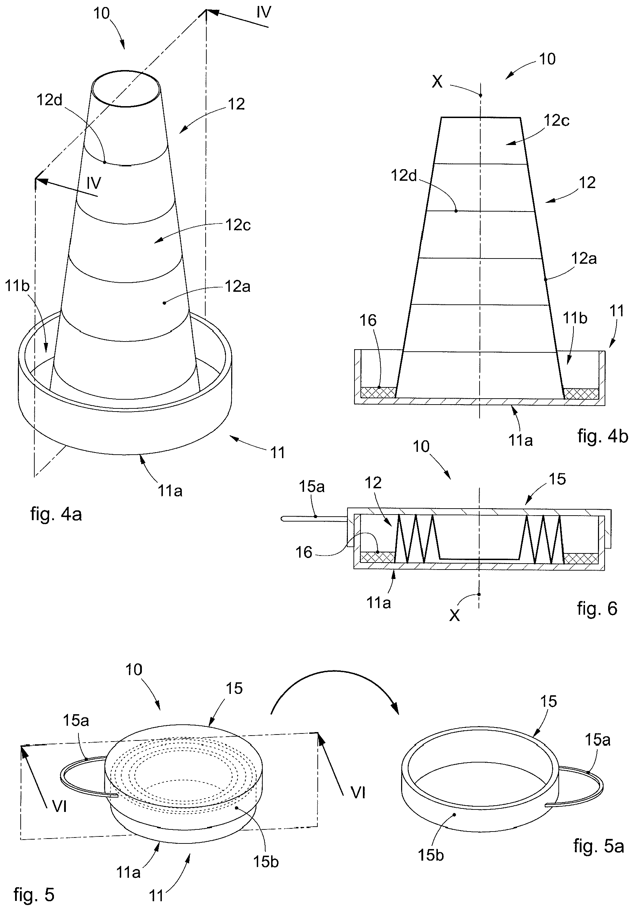

According to further embodiments, with reference to figs. 2a, 2b, 4a and 4b, the attractant element 12 can have a solid of revolution symmetry around the longitudinal axis X, similar to a truncated cone, with the base with the larger diameter facing toward the bottom 11a.

In accordance with other embodiments, the collection element 11 and the attractant element 12 have horizontal sections parallel to the support surface in the shape of a polygon, since they are shaped as a polyhedron or truncated pyramid.

With reference to the latter embodiments, preferentially, the attractant element 12 is disposed coaxially with the collection element 11.

According to another variant, with reference to figs. 3a and 3b, the attractant element 12 can be conformed as a wall, that is, it can have cross-sections, according to a transverse plane W, and horizontal sections, according to a horizontal plane Y, of rectangular shape having a length much greater than the thickness (for example, up to ten times greater). Furthermore, the front section, according to a front plane Z, orthogonal to both the transverse W and horizontal Y planes, can be represented by a polygon, preferably a rectangle or a square, having one side parallel to the bottom 11a.

The collection element 11 and the attractant element 12 can be made in a single body or can be made as two separate elements that are mounted on each other in a fixed and stable manner.

Advantageously, in the event the collection element 11 and the attractant element 12 are separated, the cleaning of the hygiene device for dogs 10 is facilitated.

In particular, according to the preferential embodiment shown in figs. 3a, 3b and 3c, the collection element 11 comprises, inside the collection zone 11b, two protuberances 11c, preferably of a rectangular or square shape, parallel to the longer side of the bottom 11a of the collection element 11 and aligned with each other. Each of the protuberances 11c is configured to define a cavity 11d. This cavity 1 1d is, in turn, configured to house the attractant element 12 in a fixed and stable manner, in contact with the bottom 11a of the collection element 11. It should be noted that, according to some embodiments, the attractant element 12 can be interchangeable and replaced with other analogous elements.

According to another preferred embodiment, the attractant element 12 having a shape similar to a wall, as previously described, can comprise, in correspondence with its top, a slot 14.

In general, the attractant element 12 comprises a target surface 12a configured to facilitate the flow and deposit by gravity, inside the collection zone 11b, of the dog's body fluids, which are expelled against the target surface 12a.

According to some preferential embodiments, the attractant element 12 having a cylindrical or truncated cone symmetry, as previously described with reference to figs. 1a, 1b, 2a, 2b, 4a, 4b, 5 and 6, is hollow inside, in order to save material and therefore reduce the manufacturing costs and the overall weight of the hygiene device for dogs 10.

Furthermore, the attractant element 12 can comprise, in correspondence with its top, two holes 12b, coaxial with each other (see figs. 1a, 1b, 2a and 2b).

According to one possible embodiment, the holes 12b are configured to house a handle 13. In this case, the handle 13 consists of one or more thread-shaped elements, possibly intertwined, and can be rigid or flexible.

According to a preferential alternative embodiment, the handle 13 can be made in a single body with the attractant element 12, being placed in correspondence with its top, and assuming a shape similar to a small rod with a polygonal, circular, elliptical or similar section (see figs. 1a, 1b, 2a and 2b, in which this last variant of the handle 13 is shown with dashed lines).

The handle 13, as well as the slot 14 indicated in the embodiment which can be seen in figs. 3a and 3b, are configured to obtain a functional grip, so as to allow the user to easily lift the hygiene device for dogs 10.

Advantageously, with the presence of the handle 13 or the slot 14, the hygiene device for dogs 10 becomes easy to transport in order to be cleaned and moved to and from different locations within a domestic or public environment.

In accordance with embodiments in which the attractant element 12 preferably assumes a shape similar to a cylinder or a truncated cone, as described above, and, preferably, in the event the hygiene device for animals 10 is installed, in a stable manner on the ground, in any open or closed public place whatsoever (for example, in a park, in a sports club, in a reception area, in a beach club, etc.), the collection zone 11b and the target surface 12a can be cleaned automatically, once the dog has urinated, by connecting the device 10 to a water supply source and to a water drainage system. In particular, this device 10 can comprise an activation element, with which the emission, through the water supply source, of one or more jets of water directed onto the top of the target surface 12a is obtained, and can comprise, in correspondence with the bottom 11a, one or more apertures fluidically connected to the water drainage system. In this way, once activated, the water will flow along the entire target surface 12a, passing through the collection zone 11b and the bottom 11a, and will carry with it, toward the drain, the body fluids expelled by the dog present on the target surface 12a and inside the collection zone 11b. In accordance with possible solutions, the activation element for activating the water jet(s) can be selected from a group comprising manual activation elements, such as, for example, a button (for example, disposed in correspondence with the top of the device 10) or a pedal (for example, placed on the ground in proximity to the collection element 11), or from a group comprising automatic activation elements, such as, for example, a presence detection sensor of the infrared type, or suchlike.

One example of these embodiments is shown, by way of a non-limiting example, in fig. 7, in which the attractant element 12 has a conical shape. It is quite evident that in other completely equivalent variants, the attractant element has a cylindrical shape.

The attractant element 12 is internally hollow. Inside it, there is provided a cavity 17 which defines a tank containing the water for cleaning the target surface 12a.

In this embodiment, the device comprises a pumping member 19, for example placed on the bottom of the cavity 17, to which a delivery duct 20 is connected which extends in height to the proximity of the top of the hygiene device 10, in correspondence with which the delivery duct 20 leads, so that the water can be sprayed onto the target surface 12a.

In one advantageous variant, not shown, the attractant element 12 comprises a plurality of slits to allow the passage of the water from the tank to the target surface 12a. For example, the slits are distributed circularly around the target surface 12, in correspondence with the upper part of the hygiene device 10, so that they can effectively spray the target surface 12 even in the event the hygiene device is disposed inclined.

In another embodiment, not shown, a circular eave can be provided that extends along a circular path outside the attractant element 12 in proximity to its top. The eave is suitably provided with a plurality of holes which allow the washing liquid to pour onto the target surface 12a.

The hygiene device for dogs 10 also comprises a system for activating the pumping member 19.

According to a first version, this system comprises an activation button 22 which has to be pressed by the user.

In a second version, alternative to the previous one, the activation system can be automated. For this purpose, one or more sensors are provided, not shown, and configured for example as presence sensors, of a type known in the state of the art, which activate the pumping member 19 when they detect the presence of the dog, and/or when urine hits the target surface 12a. By way of example, the sensors can be configured as an annular element that develops 360° around the attractant element 12.

There are provided electric power supply means for powering the pumping member 19, which are shown schematically in fig. 7 with reference number 24.

By way of a non-limiting example, these electric power supply means 24 for powering the pumping member 19 can comprise a solar panel, preferably photovoltaic, light and of small sizes, of the type known in the state of the art. The solar panel is operationally connected to the pumping member 19 and is configured to accumulate thermal energy and convert it into electrical energy to be made available to the pumping member 19.

In alternative versions, not shown, the electric power supply means can comprise batteries, rechargeable or not, which exploit the principle of the electrochemical cell, well known in the state of the art, and which will be recharged or replaced by the user once exhausted.

It is evident that the system for activating the pumping member, as well as the electric power supply means for powering this same member, are enclosed in a dedicated container, which is hermetically isolated from the tank and removably associated with the attractant element 12. In fig. 7, this container has been schematized at the top with a dashed line, although this depiction is not intended to be an exact representation of its position, but only to indicate its presence in association with the attractant element 12.

In other versions, not shown, which are alternatives to the previous ones, there can be provided an electrical connection configured to allow the pumping unit to be connected to the electricity grid, by means of suitable cables and a corresponding plug.

One variant of the hygiene device for dogs 10 can provide a direct connection of the device to the public water network in order to feed water to the tank, as shown schematically by the dashed feed duct indicated with reference number 25 in fig. 7. In this case, level sensors can be provided, for example to detect minimum and maximum level thresholds in order to automatically draw the amount of water required and stop the flow at the right moment.

According to another variant, the hygiene device for dogs 10 can be connected to the sewer system, in order to directly discharge the excreta with the aid of the washing water that flows due to gravity onto the target surface 12a. By way of example, one or more valves 27 can be provided on the bottom 11a, in particular non-return valves with automatic drive, which selectively allow the excreta to pass from the collection element 11 to respective discharge pipes 28 below, preferably directly connected to the sewer system.

According to further embodiments, described with particular reference to figs. 4a, 4b, 5 and 6, the attractant element 12, preferably having a truncated cone symmetry, is made of deformable material (for example, a synthetic elastomer, such as silicone).

In the condition of use of the hygiene device for dogs 10, with reference to figs. 4a and 4b, the attractant element 12 is fully extended, projecting upward starting from the collection zone 11b.

In particular, the attractant element 12 comprises, without a break in continuity, a plurality of bands 12c, preferentially with a circular section, which are coaxial to the longitudinal axis X and to each other, having a progressively increasing area starting from the top and down to the lower base of the attractant element 12. The bands 12c are joined together by means of bending lines 12d, preferentially circular, which keep the target surface 12a smooth and are configured so that each one is placed on the one immediately adjacent to it, when they are subjected to a compression force exerted along the direction of the longitudinal axis X, completely re-entering inside the collection zone 11b, as can be seen in figs. 5 and 6, in which the device 10 is shown in a completely closed configuration.

Advantageously, in accordance with the embodiments in which the attractant element 12 has a cylindrical or truncated cone symmetry, or in any case a symmetry similar to these, in the act of urinating the dog never treads on the collection zone 11b, avoiding getting the plantar pads of its paws soiled, and can expel its body fluids in a 360° radius around the longitudinal axis X of the hygiene device for dogs 10.

In accordance with the embodiments of figs. 4a and 4b, in which the attractant element 12 is made of deformable material and is compressible, the collection element 11 is configured to house, above it and in a position opposite the bottom 11a, a lid 15.

This lid 15 is mating in shape with the collection element 11 and is configured to close this collection element 11 at the upper part, keeping the attractant element 12 made of deformable material in a compressed position, thus identifying the transport condition of the device 10.

In particular, the lid 15 can be configured to be screwed to the collection element 11 or to be attached to the collection element 11, by exerting adequate pressure, by means of a coupling with interference.

Furthermore, preferentially, the lid 15 comprises a handle 15a configured to obtain a functional grip, in order to lift and transport the hygiene device for dogs 10. The handle 15a can be made in a single body with the lid 15, or it can be separated and inserted through suitable holes (not shown) made in the lid 15 itself, assuming a configuration similar to the first variant of the handle 13 previously described.

According to a preferential embodiment, the handle 15a is located in correspondence with the lateral surface 15b of the lid 15.

By way of a non-limiting example, in the event the device 10 has a symmetry of revolution around the longitudinal axis X, as shown in figs. 1a, 1b, 2a, 2b, 4a and 4b, 5 and 6, the collection element 11 can have a diameter equal to 28 cm and a height equal to 6 cm, while the attractant element 12 can have a height equal to 36 cm, a lower base having a diameter equal to 18 cm, an upper base, in the case of the truncated cone shape, having a diameter equal to 9 cm, with a thickness of the elements 11, 12 equal to 3 mm. On the other hand, in the event the device 10 consists of a collection element 11 with the shape of a rectangular parallelepiped and an attractant element 12 with the shape of a wall, as shown in figs. 3a, 3b and 3c, the collection element 11 can have the bottom 11a with the longer side having a length equal to 45 cm, the shorter side having a length equal to 5 cm and a height equal to 6 cm, while the attractant element 12 can have a height equal to 36 cm, with a thickness of the elements 11, 12 equal to 3-4 mm.

According to some variants, which can be adapted to all the embodiments previously described, the hygiene device for dogs 10 comprises an absorbent element 16, for example of the type with activated carbons, configured to attract and incorporate the body fluids expelled by the dog. Furthermore, the absorbent element 16 is configured to be inserted in correspondence with the collection zone 11b, above the bottom 11a of the collection element 11.

According to a preferential embodiment, this absorbent element 16 can completely occupy the bottom 11a of the collection zone 11b.

Furthermore, the absorbent element 16 can advantageously be soaked in fragrances which at least partly neutralize the bad odors produced by the dog's body fluids collected in the absorbent element 16, which is disposed on the bottom 11a of the collection element 11. Alternatively or in addition to the absorbent element 16, it can be provided to dispose mineral salts on the bottom 11a of the collection element 11 with the same purpose as above.

According to other variants, which can be adapted to all the embodiments previously described, the target surface 12a of the attractant element 12 can be customized according to the needs of the dog owner. In particular, the customization can be achieved by applying colored and/or variously decorated adhesive films, or by means of suitable printing techniques, or directly during the manufacturing process (for example, molding) of the attractant element 12.

According to further variants, which can be adapted to all the embodiments previously described, the hygiene device for dogs 10 comprises, in correspondence with the lower surface of the bottom 11a, at least one anti-slip element, not shown, which located in contact with the ground guarantees the stability of the device itself, preventing it from being displaced and/or toppled in the event of possible knocks, and thus preventing the urine contained in the collection element 11 from spilling onto the ground.

Alternatively, in order to keep the hygiene device for dogs 10 stable, it can be disposed directly on an absorbent mat, which rests on the ground, which does not get dirty and is possibly able to absorb any splashes of urine.

According to other variants, which can be adapted to all the embodiments previously described, all the elements that constitute the hygiene device for dogs 10 can be made of ecological, non-toxic, odorless and wear-resistant plastic material. In this way, advantageously, once it has reached the end of its life cycle the hygiene device for dogs 10 can be easily disposed of as waste, since it is completely recyclable.

Ultimately, in accordance with the embodiments of the present invention, a hygiene device 10 is obtained which is instinctively attractive for dogs, easy to clean and to transport, which has low manufacturing costs, respects the environment, is aesthetically pleasing, and which respects the hygiene requirements of the dog and of the domestic and/or public environments in which it can be placed.

It is clear that modifications and/or additions of parts may be made to the hygiene device for dogs as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Hygiene device for animals (10) comprising a collection element (11) which includes inside it a zone (11b) for the collection of body fluids of animals, **characterized in that** an attractant element (12), which develops in a vertical direction with respect to a bottom (11a) of said collection element (11), is disposed above said collection element (11) and comprises a target surface (12a) configured to facilitate the flow and deposit by gravity of the body fluids of the animal toward said collection element (11).

2. Device (10) as in claim 1, **characterized in that** said collection element (11) has a solid of revolution symmetry around a longitudinal axis (X), disposed vertically, similar to a cylinder or a truncated cone with the base with the smaller diameter facing toward the bottom (11 a), and in which said attractant element (12) has a solid of revolution symmetry around said longitudinal axis (X), disposed vertically, similar to a cylinder or a truncated cone with the base with the larger diameter facing toward said bottom (11a).

3. Device (10) as in claim 2, **characterized in that** said attractant element (12), having a truncated cone shape, is made of deformable material and comprises, without a break in continuity, a plurality of bands (12c), coaxial to said longitudinal axis (X), having a progressively increasing area starting from the top and joined together by means of bending lines (12d) which keep said target surface (12a) smooth and are configured so that each one is placed on the one immediately adjacent to it, when they are subjected to a compression force exerted along the direction of said longitudinal axis (X), completely re-entering inside said collection zone (11b).

4. Device (10) as in claim 3, **characterized in that** said collection element (11) is configured to house, above it and in a position opposite said bottom (11a), a lid (15) configured to close said collection element (11) at the upper part, keeping said attractant element (12) made of deformable material in a compressed position.

5. Device (10) as in claim 1, **characterized in that** said collection element (11) has a shape similar to a polyhedron, having the polygonal base resting on the ground, wherein said attractant element (12) is conformed as a wall, that is, it can have cross-sections, according to a transverse plane (W), and horizontal sections, according to a horizontal plane (Y), of rectangular shape with the length much greater than the thickness, wherein, moreover, the front section, according to a front plane (Z), orthogonal to both the transverse (W) and horizontal (Y) planes, is represented by a polygon, having one side parallel to said bottom (11a).

6. Device (10) as in claim 5, **characterized in that** said collection element (11) comprises, inside said collection zone (11b), two protuberances (11c) parallel to the longer side of said bottom (11a) and aligned with each other, wherein each of said protuberances (11c) is configured to define a cavity (11d) configured to house said attractant element (12) in a fixed and stable manner, in contact with said bottom (11a).

7. Device (10) as in any claim hereinbefore, **characterized in that** it comprises a handle (13, 15a), made in a single body with, or fixed to, said attractant element (12) or to said lid (15), or a slot (14) made on said target surface (12a) of said attractant element (12), which are configured so that said device (10) can be gripped and transported.

8. Device (10) as in any claim hereinbefore, **characterized in that** it comprises an absorbent element (16) configured to be inserted in correspondence with said collection zone (11b), above said bottom (11a) of said collection element (11), and to attract and incorporate the body fluids expelled by the animal.

9. Device (10) as in any claim hereinbefore, **characterized in that** it comprises, in correspondence with the lower surface of the bottom (11a), which rests on the ground, an anti-slip element.

10. Device (10) as in any claim hereinbefore, **characterized in that** at least said collection element (11) and said attractant element (12) are made of ecological, non-toxic, odorless and wear-resistant plastic material.

11. Device (10) as in claim 1 or 2, or as in any one of claims 8-10 when dependent on claim 1 or 2, **characterized in that** said attractant element (12) comprises an internal cavity (17) defining a tank configured to contain a liquid for washing said target surface (12a).

12. Device (10) as in claim 11, **characterized in that** it comprises a pumping member (19) configured to remove the washing liquid from said tank in order to convey it toward the top of said target surface (12a) from which it can be sprayed onto said target surface (12a).

13. Device (10) as in claim 12, **characterized in that** it comprises means for activating said pumping member (19) of the manual or automatic type, wherein said activation means comprise an activation button (22) or presence sensors to detect the presence of the animal or its excreta, **and in that** it also comprises electric power supply means (24) for powering said pumping member (19), selected from a group consisting of: solar panel, preferably photovoltaic, batteries, possibly rechargeable, with electrochemical cell, or electric cables for connection to the electric power grid.

14. Device (10) as in any claim 11-13, **characterized in that** it comprises a feed duct (25) which can be connected to the public water network in order to allow to fill said tank (18), and one or more valves (27) which selectively allow the excreta to pass from said collection element (11) to respective discharge pipes (28), preferably connected to the sewer system.
